**Europäisches Patentamt**

**European Patent Office**

**Office européen des brevets**

(11) Numéro de publication : **0 347 322 B1**

(12)

# FASCICULE DE BREVET EUROPEEN

(45) Date de publication du fascicule du brevet :
**14.08.91 Bulletin 91/33**

(51) Int. Cl.$^5$ : **H02M 7/515, H02M 3/28**

(21) Numéro de dépôt : **89401678.1**

(22) Date de dépôt : **15.06.89**

(54) **Alimentation stabilisée à taux d'ondulation réduit.**

(30) Priorité : **17.06.88 FR 8808112**

(43) Date de publication de la demande :
**20.12.89 Bulletin 89/51**

(45) Mention de la délivrance du brevet :
**14.08.91 Bulletin 91/33**

(84) Etats contractants désignés :
**DE ES GB IT NL**

(56) Documents cités :
**WO-A-86/04749**
**US-A- 3 697 717**
**PATENT ABSTRACTS OF JAPAN vol. 7, no.
247 (E-208)(1392) 02 novembre 1983, & JP-A-58
133170 (MATSUSHITA DENKO K.K.) 08 août
1983,**

(73) Titulaire : **GENERAL ELECTRIC CGR S.A.
100, rue Camille-Desmoulins
F-92130 Issy les Moulineaux (FR)**

(72) Inventeur : **Callier, Bernard
Cabinet Ballot-Schmit 7, rue Le Sueur
F-75116 Paris (FR)**
Inventeur : **Maynard, Jean-Pierre
Cabinet Ballot-Schmit 7, rue Le Sueur
F-75116 Paris (FR)**

(74) Mandataire : **Ballot, Paul Denis Jacques
Cabinet Ballot-Schmit 7, rue le Sueur
F-75116 Paris (FR)**

## Description

La présente invention a pour objet une alimentation stabilisée à taux d'ondulation réduit, utilisable notamment dans le domaine médical pour alimenter électriquement des tubes à rayons X. Elle peut néanmoins s'appliquer à d'autres domaines où on rencontre le besoin de grandes puissances électriques, de l'ordre de la centaine de kilowatts (KW) et à des très hautes tensions, par exemple de l'ordre de 100 kilovolts (KV). Elle concerne principalement des alimentations à élévation de tension, de type continu continu, munies d'un onduleur.

Une alimentation à élévation de tension de type continu-continu comporte généralement un premier redresseur connectable à un réseau de distribution électrique. La tension redressée et filtrée délivrée par ce redresseur est introduite dans un onduleur à fréquence variable qui délivre un signal ondulé. Le signal ondulé est ensuite appliqué à un transformateur élévateur, lui-même en relation avec un deuxième redresseur pour produire une haute tension redressée. Une telle haute tension redressée est par exemple utilisable pour commander un tube à rayons X en fournissant la différence de potentiel nécessaire entre la cathode et l'anode de ce tube. La régulation de la haute tension délivrée est généralement obtenue en faisant varier la fréquence d'ondulation de l'onduleur, de manière à agir sur sa fonction de transfert en puissance en fonction de la fréquence. Malgré toutes les précautions prises, notamment un choix de cellules de filtrage à forte capacité dans le deuxième redresseur, ou d'une fréquence élevée d'ondulation de l'onduleur, on note la persistance, pendant l'utilisation, d'ondulations de la haute tension délivrée. La fréquence de ces ondulations suit la fréquence de l'onduleur. Ces ondulations de la haute tension délivrée sont par ailleurs d'autant plus sensibles que la puissance susceptible d'être consommée par le tube est forte. Le problème se pose donc plus particulièrement à grande puissance.

Un tel problème se pose par exemple, lorsque disposant d'une alimentation continu-continu de ce type fonctionnant à une puissance donnée, par exemple 50 KW, on désire industrialiser une nouvelle alimentation susceptible de passer le double, le triple, voire n fois la puissance de cette alimentation existante. La solution consistant à développer une nouvelle alimentation dont les caractéristiques de tous les composants seraient doublées, triplées, multipliées par n, n'est pas industriellement praticable car la dispersion des caractéristiques des composants électroniques utilisés est telle que de multiples problèmes de réalisation surviennent. Ils ont pour résultat que cette démarche à priori simple ne peut pas trouver facilement une solution. De longues et coûteuses études doivent être menées dans ce but.

En outre, l'utilisation d'onduleurs, dans des alimentations à élévation de tension de type continu-continu, n'est pas sans effets néfastes sur le réseau électrique. En particulier, la réinjection sur le réseau électrique d'énergie réactive due à la commutation dans l'onduleur est tout simplement doublée, triplée, multipliée par n, lorsque la puissance ainsi produite double, triple, ou est multipliée n fois. Pour éviter cette réinjection, il est nécessaire de mettre en place dans le circuit de filtrage du premier redresseur des filtres très importants, donc très volumineux et très chers. Ces filtres deviennent alors d'autant plus chers que la puissance est augmentée. De telles alimentations sont par exemple décrites dans le document WO 86/04749. On y recontre cependant à la fois les problèmes d'industrialisation et les problèmes de commutation évoqués.

L'invention a pour objet de remédier à ces inconvénients en préconisant une solution qui, à puissance multiple, emprunte exactement les solutions industrielles déjà éprouvées, dont le taux d'ondulation de la haute tension aux bornes de la charge, et dont l'énergie réactive réinjectée sur le réseau sont considérablement réduites. En pratique on obtient une réduction dans un rapport 4. Le principe de l'invention repose sur l'utilisation de deux, de trois, de n onduleurs identiques branchés en parallèle à la sortie du premier redresseur, et dont le déclenchement est déphasé de l'un par rapport à l'autre, en quadrature de phase, avec un déphasage $2\pi/3$, avec un déphasage $2\pi/n$. On peut alors montrer que chaque onduleur peut fournir une fraction P/n de la puissance totale P à transmettre.

Les caractéristiques des composants passifs et actifs utilisables, compte tenu des fréquences de fonctionnement, sont alors plus facilement maîtrisées si elles ne sont pas déjà connues. Il devient notamment possible, avec de tels composants plus petits, de travailler à des fréquences d'ondulation elles-mêmes plus élevées. Ainsi, dans un exemple préféré, en utilisant deux onduleurs bialternances déphasés en quadrature, on obtient aux bornes du tube à rayons X une ondulation équivalente à un redressement 4 crêtes (l'ondulation sur la charge est 4 fois la fréquence de l'onduleur). On a donc pour une fréquence propre de fonctionnement d'un onduleur donné, une ondulation haute tension réduite au moins de moitié par rapport à un générateur comportant un seul onduleur travaillant à la même fréquence propre. En outre, dans ce type de fonctionnement le courant réactif transitant par le filtre du premier redresseur est réduit dans un rapport 4 pour la puissance nominale de l'appareil. Là encore on gagne d'une manière considérable sur le dimensionnement des capacités de filtrage.

La structure d'un bloc haute tension doit en outre assurer un équilibrage parfait entre une voie positive et une voie négative. Comme il est peu probable que, malgré toutes les précautions prises, les 2, ou les n onduleurs ainsi mis en service aient des caractéristiques de transfert égales, dans un perfectionnement on partage la contribution de chacun de ces onduleurs à la voie positive d'une part et à la voie négative d'autre part. Dans ce perfectionnement le circuit d'élévation de tension en sortie du circuit d'ondulation est alors un peu plus complexe dans sa connexion pour permettre, avec l'utilisation de transformateurs élévateurs déjà éprouvés, un équilibrage entre les voies. Cet équilibrage est indépendant des caractéristiques des onduleurs, et, pour chaque onduleur quand ils sont bi-alternance, entre une alternance et l'autre.

L'invention a donc pour objet une alimentation stabilisée à taux d'ondulation réduit conforme à la revendication 1 et 2. Dans un perfectionnement les onduleurs sont de type double alternance, et les déphasages valent en conséquence $\pi/n$. Pour remédier aux problèmes de commutation et de réinjection de parasites, l'invention a pour objet une alimentation stabilisée à taux d'ondulation réduit conforme à la revendication 2.

L'invention sera mieux comprise à la lecture de la description qui suit et à l'examen des figures qui l'accompagnent. Celles ci ne sont données qu'à titre indicatif et nullement limitatif de l'invention. Les figures montrent :

— figure 1 : le schéma de principe d'une alimentation stabilisée selon l'invention
— figures 2a à 2f : des diagrammes temporels de signaux de commande intervenant dans le pilotage de l'alimentation selon l'invention.

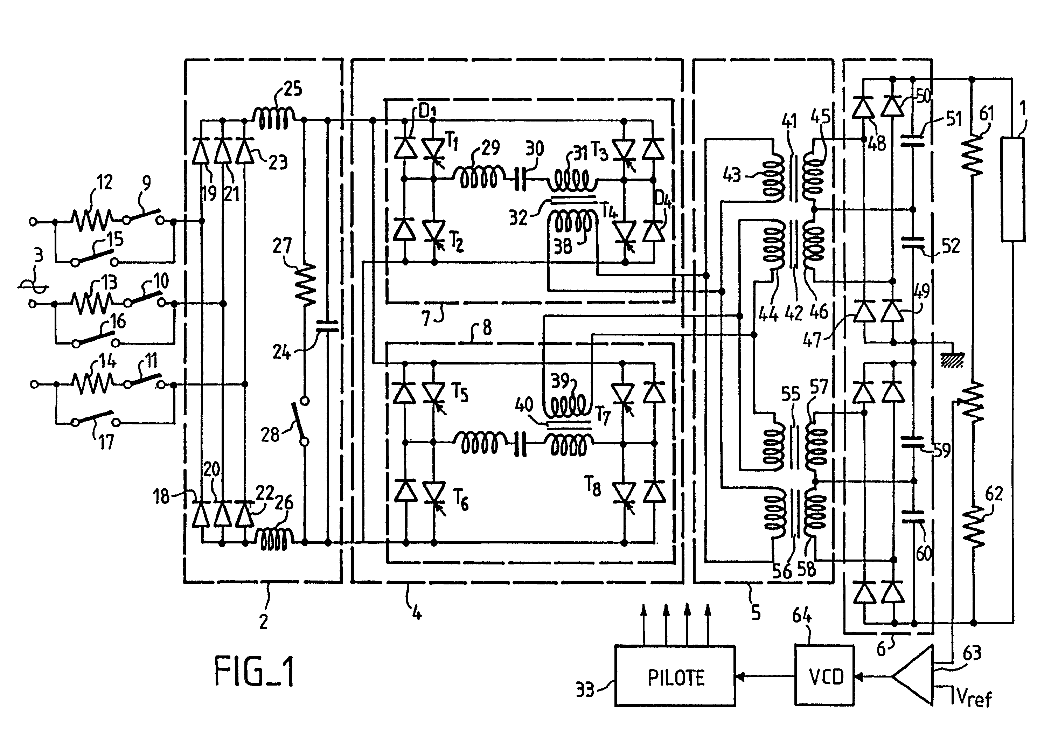

La figure 1 montre une alimentation stabilisée à taux d'ondulation réduit selon l'invention. Celle-ci est notamment destinée à alimenter un tube à rayons X 1 utilisable dans une application médicale. Cette alimentation comporte essentiellement un premier redresseur 2 connecté à un réseau électrique 3. Un circuit d'ondulation 4 permet de faire onduler une tension continue redressée et filtrée délivrée par le premier redresseur 2. Un circuit d'élévation de tension 5 élève la tension du signal délivré par le circuit d'ondulation. Le circuit 5 est connecté à un deuxième redresseur 6 destiné à produire une haute tension continue à partir d'une haute tension alternative délivrée par le circuit élévateur 5. Une caractéristique essentielle de l'invention réside dans le fait que le circuit pour faire onduler le signal délivré par le premier redresseur comporte n onduleurs, ici n = 2. Ainsi, le circuit 4 comporte les onduleurs 7 et 8 respectivement. Dans l'exemple représenté ces onduleurs 7 et 8 sont de type bi-alternance et comportent chacun 2 jeux d'interrupteurs pour faire passer le courant alternativement dans un sens puis dans un autre, dans un circuit résonnant.

Le fonctionnement de l'alimentation selon l'invention est le suivant. Au moment de la mise sous tension de l'installation un jeu d'interrupteurs 9 à 11 est commuté pour permettre le raccordement du redresseur 2 au réseau électrique 3 par l'intermédiaire de résistances en série respectivement 12 à 14. La présence des résistances 12 à 14 est justifiée par le caractère grande puissance disponible de l'alimentation à réaliser et par le souci de limiter le courant d'appel à l'amorçage dans le réseau électrique. Les résistances 12 à 14 ne servent qu'à la précharge des condensateurs du filtre en aval. Elles ne servent que lors de la mise sous tension des convertisseurs qui, eux assurent la montée de la haute tension. Les résistances 12 à 14 jouent, avec les capacités de filtrage du redresseur 2, un rôle de circuit passe-bas : le courant d'amorçage ne croît pas trop brutalement. Lorsque cet amorçage est suffisant un deuxième jeu 15 à 17 d'interrupteurs en parallèle avec les résistances 12 à 14 en série avec les interrupteurs respectivement 9 à 11, est fermé de manière à éliminer ultérieurement les pertes énergétiques dans les résistances 12 à 14. Ce temps d'amorçage, ou aussi bien temps de montée, est de l'ordre de quelques millisecondes.

Le signal alternatif délivré par le réseau 3 est ainsi appliqué à l'entrée d'un redresseur 2 classique à diodes 18 à 23. Le redresseur à diodes débite une tension redressée dans une cellule de filtrage comportant essentiellement un condensateur de filtrage 24 et deux inductances de choc 25 et 26. Le condensateur 24 est branché en série entre les inductances 25 et 26, le tout est branché en parallèle sur le redresseur à diodes. Une tension ainsi redressée et filtrée est alors disponible aux bornes du condensateur 24. Une résistance 27 en série avec un interrupteur 28 est également placée en parallèle sur le condensateur 24. Au moment de la coupure de l'alimentation électrique de l'installation, la fermeture de l'interrupteur 28 (après réouverture des interrupteurs 9 à 11 et 15 à 17) permet de décharger rapidement le condensateur 24 dans la résistance 27, de manière à ne pas avoir à attendre trop longtemps une décharge par courant de fuite de la capacité 24 à travers les diodes 19 à 22.

Selon l'invention, le circuit d'ondulation comporte n onduleurs, et dans l'exemple on décrira une solution préférée avec deux onduleurs 7 et 8. Chaque onduleur est relié, à son entrée, en parallèle avec la sortie du premier redresseur 2. Les deux onduleurs sont semblables. Par exemple l'onduleur 7 comporte deux jeux de thyristors respectivement $T_1$ $T_4$ et $T_3$ $T_2$. Chaque jeu de thyristors est branché en série de part et d'autre d'un circuit résonnant comportant une inductance 29, un condensateur 30 et un enroulement primaire 31 d'un transformateur 32.

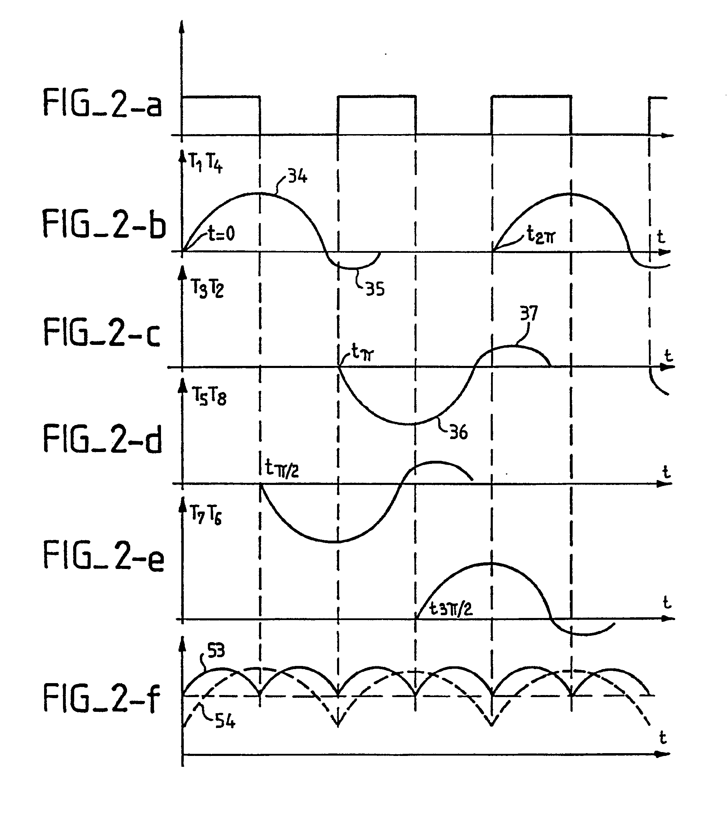

Le fonctionnement de cet onduleur est le suivant, confer figures 2a à 2c. A un instant t = 0 les gâchettes des thyristors $T_1$ et $T_4$ sont déclenchées par un ordre émis par un circuit pilote 33. Le courant passe alors dans le thyristor $T_1$, dans l'inductance 29, dans la capacité 30, et dans le primaire du transformateur 31, pour se refermer par le thyristor $T_4$ sur la sortie du redresseur 2. Une alternance positive 34 naît alors dans le circuit résonnant 29 à 31. Cette alternance donne par résonance naissance à une alternance négative de réaction 35. Le courant de l'alternance de réaction 35 est réinjecté dans le redresseur 2 par l'intermédiaire des diodes respectivement $D_4$ et $D_1$ en parallèle sur les thyristors $T_4$ et $T_1$. Les diodes $D_1$ et $D_4$ qui autorisent le passage de l'alternance de réaction permettent le blocage des thyristors $T_1$ et $T_4$ jusqu'à leur prochain déclenchement. A un instant $t_\pi$ (fig 2c) se produisant très peu après le début de l'alternance réactive 35, le circuit pilote 33 déclenche le jeu des thyristors $T_3$ et $T_2$ tendant eux aussi à faire passer un courant de charge, mais en sens inverse, dans le circuit résonnant 29 à 31. Les thyristors $T_3$ et $T_2$ donnent alors naissance à une alternance négative 36 qui se combine avec l'alternance 35. L'alternance 36 donne de la même façon que l'alternance 34 naissance à une alternance de réaction 37. Il en résulte que le courant qui passe dans le circuit oscillant 29 à 31 est alors sensiblement sinusoidal et que ce courant peut alors être élevé dans le transformateur 32 pour être disponible sur le secondaire 38 de ce transformateur 32. Au bout d'une durée $t_{2\pi}$ (fig 2b), le phénomène décrit se reproduit sous le pilotage du circuit 33.

L'onduleur 8 est en tous points comparable à l'onduleur 7 à cela près que le déclenchement de ses thyristors $T_5$ $T_8$ ou $T_7$ $T_6$ est provoqué en quadrature de phase, à des instants $t_{\pi/2}$ ou $t_{3\pi/2}$, par rapport aux instants où sont provoqués les déclenchements des thyristors $T_1$ $T_4$ et $T_3$ $T_2$. Il en résulte que le secondaire 39 du transformateur 40 du circuit résonnant de l'onduleur 8 délivre un signal, lui aussi sinusoidal, mais déphasé en quadrature par rapport au signal délivré par le secondaire 38. On pourra facilement généraliser dans le cas où il y aurait n onduleurs. Dans ce cas les signaux délivrés par ces onduleurs seraient déphasés de $2\pi/n$, ou plus exactement de $\pi/n$ avec comme ici des onduleurs bi-alternances.

Les signaux disponibles sur les secondaires 38 et 39 sont ensuite envoyés dans un circuit élévateur 5 qui comportent selon une variante, deux transformateurs 41 et 42. Les deux primaires respectivement 43 et 44 de ces transformateurs 41 et 42 sont reliés aux secondaires, respectivement 38 et 39. Les secondaires respectivement 45 et 46 des transformateurs 41 et 42 sont en série l'un avec l'autre et alimentent un deuxième circuit redresseur à diodes 47 à 50 du même type que le premier redresseur 2. Ce deuxième redresseur est branché en parallèle à deux condensateurs en série 51 et 52. Pour équilibrer le montage, le point milieu des condensateurs 51 et 52 est même relié au point milieu des secondaires 45 et 46. D'autres variantes sont possibles.

Indépendamment d'autres perfectionnements que l'on verra plus loin, cette combinaison des signaux en quadrature de phase dans deux transformateurs 41, 42 avec secondaires en série, ou dans un seul transformateur à n primaires, a pour effet de délivrer un signal redressé avec n fois plus de crêtes que s'il n'y avait qu'un seul onduleur. La figure 2f montre comparativement les ondulations 53 obtenues après redressement d'un signal selon l'invention, et les ondulations moins fréquentes 54, mais en même temps beaucoup plus importantes quand il n'y a qu'un seul onduleur.

La diminution des amplitudes des ondulations est liée à deux facteurs. D'une part la combinaison d'ondulations en quadrature donne naissance à une ondulation commune plus faible. D'autre part le fonctionnement fictif du deuxième redresseur à un rythme deux fois plus élevé permettent, avec des mêmes capacités de filtrage de filtrer deux fois mieux le signal délivré. Le même phénomène se reproduit d'ailleurs en ce qui concerne la réinjection sur le réseau 3 des résidus de commutation. Comme la fréquence de ces commutations est en apparence deux fois plus élevée, les réinjections sont mieux amorties par les impédances de choc 25 et 26 industrialisées pour une application avec une puissance donnée. On peut ainsi avoir, paradoxalement, avec l'invention, un résultat encore meilleur pour une puissance double, voire multipliée par n, que pour l'onduleur de base. En outre les courants réactifs se compensent mutuellement ce qui améliore encore la performance. Comme indiqué précédemment l'invention présente bien entendu l'avantage d'utiliser deux fois des onduleurs semblables, c'est-à-dire ayant subi avec succès une épreuve précédente d'industrialisation. En définitive, la définition d'une alimentation stabilisée à faible taux d'ondulation mais à puissance plus grande se trouve ainsi grandement facilitée.

En pratique, malgré toutes les précautions d'industrialisation prises les onduleurs 7 et 8, ne sont pas rigoureusement identiques. Pour remédier à cet inconvénient, on préconise de dupliquer dans le circuit élévateur les transformateurs tels que 41 et 42. On monte alors deux autres (n autres) transformateurs 55 et 56 dont les primaires sont branchés en parallèle avec les primaires des transformateurs 41 et 42 et dont les secondaires 57 et 58 sont reliés en série l'un avec l'autre. Ces secondaires 57 et 58 sont eux aussi branchés à un autre deuxième circuit redresseur, identique au circuit 48-52. Ce deuxième redresseur identique comporte en particulier deux condensateurs en série 59 et 60 en sortie. On peut considérer qu'en parallèle avec les condensateurs 51 et 52 on dispose de la voie positive, et qu'en parallèle avec les condensateurs 59 et 60 on dispose d'une voie négative. Il est alors possible, en reliant en série les condensateurs 52 et 59 de disposer d'un point milieu connectable à la masse. De cette manière on réduit les difficultés d'isolement électrique en utilisation à très haute tension. En pratique les contraintes d'isolement sont alors divisées par 2.

D'une manière classique aux bornes du tube à rayons X 1 est branché un pont diviseur de résistance 61 et 62 dont le point milieu est relié à un comparateur 63. Le comparateur 63 reçoit par ailleurs sur une entrée de comparaison une tension de référence $V_{réf}$. Le signal d'erreur délivré par le comparateur 63 est introduit d'une manière connue dans un convertisseur tension fréquence 64 (VCO) qui débite un signal carré, de rapport cyclique 1, dans le circuit pilote 33. De cette manière lorsque la fréquence du convertisseur tension fréquence 64 varie en fonction de la tension à réguler, le signal carré, figure 2a, évolue de manière à garder le déphasage en quadrature d'attaque des onduleurs 7 et 8. Un rapport cyclique de 1 correspond à un signal impulsionnel dont la durée de l'impulsion est égale à la durée pendant laquelle l'impulsion est absente. Dans un perfectionnement, de manière à déclencher en alternance les jeux différents de thyristors des onduleurs, la fréquence du convertisseur tension fréquence 64 est même le double (ou n fois) celle de la fréquence de résonance des onduleurs. Il suffit alors de piloter les gâchettes des thyristors d'un onduleur par les fronts de montée de l'impulsion, et les gâchettes des thyristors de l'autre onduleur par les fronts de descente de ces impulsions. Du fait que la fréquence est double d'une impulsion à l'autre c'est, dans chaque onduleur, un jeu de thyristor ou l'autre qui est déclenché. Des circuits logiques contenus dans le circuit pilote 33 pour réaliser cette opération sont à la portée de l'homme de métier.

**Revendications**

1. Alimentation stabilisée à taux d'ondulation réduit, pour tube à rayons X, comportant
— un premier circuit redresseur (2) connectable à un réseau électrique (3),
— un circuit (4) pour faire onduler une tension ($T_1$ $T_4$) délivrée par le premier redresseur,
— ce circuit d'ondulation comportant n onduleurs du type double alternance connectés en parallèles au premier redresseur (7, 8), ondulant à une même fréquence, et déclenchés les uns par rapport aux autres avec un déphasage de $\pi/n$.
— un circuit (5) avec plusieurs transformateurs pour élever la tension produite par le circuit d'ondulation,
— et un deuxième (48-52) circuit redresseur pour redresser la tension élevée, caractérisée en ce que le circuit d'élévation de tension comporte 2n transformateurs (41-42, 55-56), ces 2n transformateurs étant répartis en deux familles de n transformateurs, chacun des n onduleurs étant reliés à un des transformateurs de chacune des deux familles, les secondaires des n transformateurs de chaque famille étant en série et débitant dans un deuxième circuit redresseur (51-52, 59-60) affecté à cette famille, et en ce que les deux deuxièmes circuits redresseurs sont en série (52, 59) l'un avec l'autre.

2. Alimentation stabilisée à taux d'ondulation réduit, pour tube à rayons X, comportant
— un premier circuit redresseur (2) connectable à un réseau électrique (3),
— un circuit (4) pour faire onduler une tension ($T_1$ $T_4$) délivré par le premier redresseur,
— ce circuit d'ondulation comportant n onduleurs du type double alternance connectés en parallèle au premier redressseur (7, 8), ondulant à une même fréquence, et déclenchés les uns par rapport aux autres avec un déphasage de $\pi/n$.
— un circuit (5) avec plusieurs transformateurs pour élever la tension produite par le circuit d'ondulation,
— et un deuxième (48-52) circuit redresseur pour redresser la tension élevée, caractérisée en ce que le circuit d'élévation de tension comporte au moins n transformateurs (41, 42) connectés chacun par son primaire à un onduleur (7, 8) et dont les secondaires (45, 46) en série les uns avec les autres sont reliés au deuxième redresseur.

3. Alimentation selon la revendication 1 caractérisée en ce que le circuit d'élévation de tension comporte 2n transformateurs (41, 42, 55, 56) avec 2n primaires branchés deux à deux en parallèle en sortie respectivement de chacun des n onduleurs.

4. Alimentation selon la revendication 3, caractérisée en ce que le circuit d'élévation de tension comporte deux transformateurs avec n primaires.

5. Alimentation selon l'une quelconque des revendications 1 à 4 comportant en outre un circuit de régulation à convertisseur tension fréquence (64) caractérisée en ce que le convertisseur tension fréquence débite un signal carré de rapport cyclique 1.

6. Alimentation selon l'une quelconque des revendications 1 à 6 caractérisée en ce que n vaut 2.

**Patentansprüche**

1. Stabilisierte Versorgung mit geringem Wechselspannungsverhältnis für eine Röntgenröhre, mit :
— einer ersten Gleichrichterschaltung (2), die an ein elektrisches Netzwerk (3) angeschlossen werden kann,
— einer Schaltung (4), um eine Wechselrichtung einer Spannung ($T_1$ $T_4$), die durch den ersten Gleichrichter abgegeben wird, vorzunehmen.
— wobei diese Wechselrichterschaltung n Zweiweg-Wechselrichter umfaßt, die parallel zu dem ersten Gleichrichter (7, 8) geschaltet sind und mit gleicher Frequenz schwingen sowie mit einer Verschiebung von $\pi/n$ zueinander ausgelöst werden,
— einer Schaltung (5) mit mehreren Transformatoren, um die durch die Wechselrichterschaltung erzeugte Spannung zu erhöhen,

— und mit einer zweiten Gleichrichterschaltung (48-52) zum Gleichrichten der erhöhten Spannung, dadurch gekennzeichnet, daß die Schaltung zum Erhöhen der Spannung 2n Transformatoren (41-42, 55-56) umfaßt, wobei diese 2n Transformatoren in zwei Gruppen von n Transformatoren verteilt sind, jeder der n Wechselrichter mit einem der Transformatoren jeder der zwei Gruppen verbunden ist und die Sekundärwicklungen der n Transformatoren jeder Familie in Serie geschaltet sind und in eine dieser Gruppe zugeordnete Gleichrichterschaltung (51-52, 59-60) einspeisen, und daß die beiden zweiten Gleichrichterschaltungen (52, 59) in Serie geschaltet sind.

2. Stabilisierte Versorgung mit geringem Wechselspannungsverhältnis für eine Röntgenröhre, mit :

— einer ersten Gleichrichterschaltung (2), die an ein elektrisches Netzwerk (3) angeschlossen werden kann,

— einer Schaltung (4), um eine Wechselrichtung einer Spannung ($T_1$, $T_4$), die durch den ersten Gleichrichter abgegeben wird, vorzunehmen,

— wobei diese Wechselrichterschaltung n Zweiweg-Wechselrichter umfaßt, die zu dem ersten Gleichrichter (7, 8) parallel geschaltet sind und mit gleicher Frequenz schwingen sowie mit einer Verschiebung von $\pi/n$ zueinander ausgelöst werden,

— einer Schaltung (5) mit mehreren Transformatoren, um die durch die Wechselrichterschaltung erzeugte Spannung zu erhöhen,

— sowie einer zweiten Gleichrichterschaltung (48-52) zum Gleichrichten der erhöhten Spannung, dadurch gekennzeichnet, daß die Schaltung zum Erhöhen der Spannung wenigstens n Transformatoren (41, 42) umfaßt, wovon jeder über seine Primärwicklung an einen Wechselrichter (7, 8) angeschlossen ist und wovon die in Serie geschalteten Sekundärwicklungen (45, 46) mit dem zweiten Gleichrichter verbunden sind.

3. Versorgung nach Anspruch 1, dadurch gekennzeichnet, daß die Schaltung zum Erhöhen der Spannung 2n Transformatoren (41, 42, 55, 56) mit 2n Primärwicklungen umfaßt, die paarweise an den jeweiligen Ausgang jedes der n Wechselrichter parallel angeschlossen sind.

4. Versorgung nach Anspruch 3, dadurch gekennzeichnet, daß die Schaltung zum Erhöhen der Spannung zwei Transformatoren mit n Primärwicklungen umfaßt.

5. Versorgung nach einem der Ansprüche 1 bis 4, die ferner eine Regelschaltung mit einem Spannungs-Frequenz-Wandler (64) umfaßt, dadurch gekennzeichnet, daß der Wandler ein quadratisches Signal mit dem Tastverhältnis 1 abgibt.

6. Versorgung nach einem der Ansprüche 1 bis 6, dadurch gekennzeichnet, daß n 2 beträgt.

## Claims

1. A stabilized power supply with a reduced degree of ripple for an x-ray tube, comprising

— a first rectifying circuit (2) adapted to be connected with an electrical network (3),

— a circuit (4) in order to inversion of a voltage ($T_1$ $T_4$) supplied by the first rectifier,

— said ripple circuit comprising n double alternation inverters connected in parallel with the first rectifier (7 and 8), inverting at the same frequency and mutually triggered with a phase shift of $\pi/n$,

— a circuit (5) with a plurality of transformers in order to increase the voltage produced by the inverting circuit,

— and a second inverting circuit (48 through 52) in order to rectify the increased voltage, characterized in that the voltage increasing circuit comprises 2n transformers (41 and 42, 55 and 56), said 2n transformers being placed in two groups of n transformers, each of the n inverters being connected with one of the transformers of each of the two groups, the secondary windings of the n transformers of each group being in series and feeding a second rectifying circuit (51 and 52, 59 and 60) assigned to this group, and in that the two second rectifying circuits are mutually in series (52 and 59) with each other.

2. A stabilized power supply with a reduced degree of ripple for an x-ray tube, comprising

— a first rectifying circuit (2) adapted to be connected with an electrical network (3),

— a circuit (4) in order to cause inversion of a voltage ($T_1$ $T_4$) supplied by the first rectifier,

— said ripple circuit comprising n double alternation inverters connected in parallel with the first rectifier (7 and 8), inverting at the same frequency and mutually triggered with a phase shift of $\pi/n$,

— a circuit (5) with a plurality of transformers in order to increase the voltage produced by the inverting circuit,

— and a second inverting circuit (48 through 52) in order to rectify the increased voltage, characterized in that the voltage increasing circuit comprises at least n transformers (41 and 42), said n transformers being each connected by means of its primary winding with an inverter (7 and 8) and of which the secondary windings (45 and 46) in series with each other are connected with the second rectifier.

3. The power supply as claimed in claim 1, characterized in that the circuit for increasing the voltage comprises 2n transformers (41, 42, 55 and 56) with 2n primaries connected in pairs in parallel at the respective output of each of the n inverters.

4. The power supply as claimed in claim 3, characterized in that the voltage increasing circuit comprises two transformers with n primary windings.

5. The power supply as claimed in any one of the preceding claims 1 through 4 furthermore comprising a regulation circuit with a voltage frequency converter (64), characterized in that the voltage frequency converter supplies a square wave signal with a duty cycle of 1.

6. The power supply as claimed in any one of the preceding claims 1 through 6, characterized in that n is equal to 2.

FIG_1

EP 0 347 322 B1

PILOTE

VCD

$V_{ref}$

FIG_2-a

FIG_2-b

FIG_2-c

FIG_2-d

FIG_2-e

FIG_2-f